Europäisches Patentamt

European Patent Office

Office européen des brevets

(19)

(11) Publication number: 0 066 447
A1

# (12) EUROPEAN PATENT APPLICATION

(21) Application number: 82302683.6

(22) Date of filing: 25.05.82

(51) Int. Cl.³: **C 08 G 14/06**
C 08 G 14/12, C 08 L 63/00
C 08 G 59/62

(30) Priority: 25.05.81 JP 79101/81
25.05.81 JP 79102/81

(43) Date of publication of application:
08.12.82 Bulletin 82/49

(84) Designated Contracting States:
DE FR GB

(71) Applicant: MITSUBISHI GAS CHEMICAL COMPANY, INC.
5-2, Marunouchi 2-chome Chiyoda-Ku
Tokyo(JP)

(72) Inventor: Miyamoto, Akira
No. 579, Shinomiya
Hiratsukashi Kanagawa(JP)

(72) Inventor: Sato, Katsuo
No. 1-6-28, Fujimigaoka Ninomiya-cho
Naka-gun Kanagawa(JP)

(72) Inventor: Mine, Shigeo
No. 103, Takada
Chigasaki-shi Kanagawa(JP)

(72) Inventor: Kasuya, Takeshige
No. 186-1, Tsutsumi
Chigasaki-shi Kanagawa(JP)

(74) Representative: Diamond, Bryan Clive et al,
Gee & Co. Chancery House Chancery Lane
London WC2A 1QU(GB)

(54) Reaction of a phenol, aldehyde and amine to produce hardening agent for epoxy resins.

(57) A reaction product is obtained by reacting together a phenol and a polyamine at a temperature of 70° to 100°C, adding to the mixture 1.1 to 2 moles formaldehyde or a precursor thereof per mole of the phenol, allowing reaction at 70° to 100°C with stirring, and heating to 100° to 180°C to substantially remove the water formed.

Optionally 0.1 to 1.5 moles of acrylonitrile are then added; in this case the ratio of amine to phenol can be 1-2.5:1 otherwise the ratio must be 2-2.5:1.

Exemplified phenols include phenol, cresol, and alkyl, aryl and aralkyl phenols; the polyamine can be an alkylene, aralkylene or alicyclic polyamine.

The product contains not more than 5 % of unreacted phenol and not more than 35 % of unreacted amine and so is not harmful to the skin of a user. It is easily used as hardening agent for a epoxy resin, e.g. of the bisphenol, novolak or cyclohexene oxide types, with good hardening properties.

EP 0 066 447 A1

Croydon Printing Company Ltd.

- 1 -

Reaction of a phenol, aldehyde and amine to produce hardening
agent for epoxy resins

The present invention relates to a process of producing a
hardening agent for epoxy resins.  More particularly, this
invention relates to a process of producing a hardening
agent for epoxy resins which is a low-viscosity product
having an ureacted phenol content of 5% or less obtained
by reacting a phenol, formaldehyde and an amine.

Several reaction products obtained by reacting a phenol,
an aldehyde and an aliphatic polyamine are known and are
widely used in many industrial fields as hardening agents
for epoxy resins at from low temperature to ordinary
temperature or as hardening agents on wet surfaces.  However,
when such hardening agents contain more than 5% of unreacted
phenols, they can be harmful to the users;  furthermore,
epoxy resin hardening agents with a high content of unreacted
amines are very likely to cause a rash on the skin of
workers who handle them.

In recent years, there has been an increasing demand for
low-viscosity epoxy resin hardening agents that are products
of the reaction of phenol, aldehyde and amine and which have
a low content of unreacted phenol.  There is also a great demand for such hardening agents which also have a low content of unreacted amine. However, it is difficult to product a reaction product that meets all of these requirements, i.e. low contents of unreacted phenols and amines, and low viscosity.

A reaction product of phenol, aldehyde and amine is conventionally produced by one of the following four methods: 1) a phenol is first reacted with aldehyde, and then amine is added to the resulting product; 2) amine is first reacted with aldehyde, and them phenol added to the resulting product; 3) phenol and amine are mixed, and aldehyde is added to the mixture to cause the three components to react with each other; and 4) phenol, aldehyde and amine are simultaneously reacted with each other. The third method is recommended for industrial use, and every prior publication relating thereto specifies that aldehyde be added to the mixture of phenol and amine at a temperature not higher than 40°C. If the amount of aldehyde to be added is not great, it is possible to produce a hardening agent at a temperature not more than 40°C, but if the amount of aldehyde to be added is increased, the reaction between aldehyde and amine will produce an increased amount of a white product which is insoluble in the reaction mixture, thereby making it difficult to further agitate or blend the mixture. If the amount of aldehyde added is small, the resulting reaction product contains more of the unreacted phenol and amine, and so such product does not have the properties desired for an epoxy resin hardening agent.

A reaction product with low content of unreacted phenol could be obtained without such disadvantage by the first method wherein phenol is reacted with aldehyde before addition of amine. However, this method unavoidably produces a highly viscous reaction product, and the viscosity further increases if more aldehyde is used. It is therefore difficult to use such a reaction product without using a large amount of a diluting agent; however, the use of a large amount of diluting agent results in a hardening agent that cannot harden an epoxy resin without adversely affecting the physical properties and chemical resistance of the resin.

In the second method wherein amine is first reacted with aldehyde before addition of phenol, use of a large amount of the aldehyde gives a viscous reaction mixture which is very difficult to stir in practice. To reduce the amount of unreacted phenol in the reaction product, a relatively large amount of aldehyde must be used, whereby the viscosity of the reaction product increases and, at the same time, white product tends to be formed in a large amount due to the reaction between aldehydes and amines. For such reasons, the second method is also not suitable for making the hardening agent.

In either of the above conventional methods, the viscosity of the reaction product can be effectively decreased by adding more amine, but if the resulting product, i.e. hardening agent, contains a large amount of unreacted amine, it is highly likely to cause a rash on the skin of the workers who handle it. In addition, the epoxy resin being hardened by the resulting product absorbs carbon dioxide in air and turns white, which damages the appearance of the hardened resin. In particular, when the hardening agent is applied to multiple coated layers, the absorption of carbon dioxide may cause undesirable separation of the layers.

We have found that a reaction product suitable as a hardening agent for epoxy resins having a low viscosity and a reduced content of the unreacted residual phenol can be produced by simultaneously reacting phenol, formaldehyde and amine in specified proportions and under specified reaction conditions, and also found that by further reacting the above reaction product with acrylonitrile, a reaction product having a low content of unreacted amine can be produced.

The present invention provides a process for producing a hardening agent for epoxy resins having a low viscosity and a low content of unreacted phenol and amine, comprising mixing at least one phenol with at least one polyamine, adding 1.1 to 2 mols formaldehyde per mol of phenol to the mixture while it is at a temperature between 70 and 100°C, stirring the resulting mixture at a temperature between 70 and 100°C to react the three components with each other, heating the reaction mixture to between 100 and 180°C to remove the water produced during the reaction, and optionally reacting acrylonitrile with the resulting reaction product.

In the known method 3), the molar amount of amine does not exceed that of phenol and the amount of aldehyde does not exceed that of phenol.

The characteristic feature of this invention is that the reactants are reacted in specified proportions and temperature. It is surprising that the invention provides a reaction product with an extremely low viscosity although it uses a large amount of formaldehyde.

If formaldehyde is used in an amount less than 1.1 mole per mole of the phenol, the amount of unreacted phenol remaining in the hardening agent increases, and if formaldehyde is used in an amount more than 2 moles, a highly viscous product is formed.

In the embodiment where the reaction product obtained by reacting the phenol, amine and formaldehyde is modified by reaction with acrylonitrile, the amount of the amine used can vary over a wider range, down to 1 mole. If no such modification is effected, the amine is used in an amount of from 2.0 to 2.5 moles per mole of the phenol. If the amine is used in an amount less than 1 mole per mole of the phenol, the viscosity of the hardening agent increases, and if the amount of amine is more than 2.5 moles, the amount of unreacted amine in the hardening agent increases. The greater the amount of the amine used, the smaller the amount of the unreacted phenol in the hardening agent, and hence the lower its viscosity. However, if the amine is used in excess of 2.5 moles, it absorbs carbon dioxide from the air and an epoxy resin hardened by the resulting hardening agent turns white, which damages the good appearance of the resin. Further, if the hardening agent is applied to multiple coated layers, the excessive amine may cause undesirable separation of the layers.

The formaldehyde is added to the mixture of phenol and amine at a temperature of from 70 to 100°C. If the reaction temperature is below 70°C, the white substance produced by the reaction between amines and formaldehyde dissolves so slowly that the reaction mixture cannot be stirred thoroughly. There is no particular limitation on the period over which formaldehyde is added to the mixture of the phenol and amine, but a too prolonged addition is not practical. If desired, a tertiary amine may be added to the reaction system as a catalyst.

Examples of phenols which can be used in the process of the present invention include phenol; ortho-, meta- or para-cresol; alkyl phenols such as n- or iso-butyl phenol, octyl phenol, nonyl phenol and xylenol; aryl phenols such as phenyl phenol, tolyl phenol and xylyl phenol; and aralkyl phenols such as benzyl phenol and styrenated phenol. These phenols may be used alone or in a mixture thereof. If desired, polyfunctional phenolic compounds such as 4,4'-dihydroxydiphenylmethane and 2,2-bis(4'-hydroxyphenyl)propane may be used.

The formaldehyde is usually employed in the form of an aqueous solution thereof. If desired, para-formaldehyde, trioxane and other compounds that produce formaldehyde may be used.

Examples of amines are polyamines such as linear aliphatic polyamines such as ethylenediamine, diethylenetriamine, triethylenetetramine, tetraethylenepentamine, pentaethylenehexamine, tetramethylenediamine and hexamethylenediamine; aromatic ring-containing aliphatic polyamines such as meta-xylylenediamine and para-xylylenediamine, and alicyclic polyamines such as 1,3- or 1,4-bis(aminomethyl)cyclohexane and N-aminoethylpiperazine. These amines may be used alone or in a mixture thereof.

If acrylonitrile is used, it is added to the reaction product after substantially removing the water produced during the reaction, in an amount of from 0.2 to 1.5 moles per mole of the phenol. There is no particular limitation on the temperature for this reaction between acrylonitrile and the reaction product, and any temperature not exceeding $100^{\circ}C$ may be used. The addition of acrylonitrile is effective not only for reducing the amount of free amine but also for extending the pot life of curable epoxy resin compositions, whereby the operability of the hardening agent can be markedly improved. These advantages are not obtained if less than 0.2 mole of acrylonitrile is added. If acrylonitrile is used in an amount more than 1.5 moles, it takes much time to harden the epoxy resin, and in addition, the hardened product does not have satisfactorily high waterproofness and moisture resistance.

The reaction product obtained by the method of the present invention contains not more than 5% of the unreacted phenol and not more than 35% of the unreacted amine, and has an amine value usually in the range of from 350 to 650 mg KOH/g and a viscosity of not more than 8000 cps at $25^{\circ}C$, but usually at least 2000 cps. The reaction product is therefore very suitable for use as a hardening agent for epoxy resins.

Any known epoxy resins can be hardened by the reaction product obtained by the process of the present invention, such as conventional bisphenol type epoxy resins, novolak type epoxy resins and cyclohexene oxide type epoxy resins. If solid epoxy resins are used, they are preferably dissolved in a suitable known solvent before they are hardened. The amount of the hardening agent used can be determined by calculating the active hydrogen equivalent with respect to the epoxy equivalent. In determining the amount of hardening agent, other factors such as the characteristics required for the hardened epoxy resin should also be considered.

When the hardening agent produced by the process of this invention is incorporated into an epoxy resin, other additives which are conventionally used in epoxy resins can also be added, for example, diluents (e.g. benzyl alcohol, dixylyl-methane or dixylylethane), low viscosity xylene-formaldehyde resins (e.g. Nikanol-LL of Mitsubishi Gas Chemical Company, Inc, number average molecular weight of 350 to 380), monoepoxy compounds (e.g. butylglycidyl ether, phenylglycidyl ether and Cardular E of Yuka Shell Epoxy Co., Ltd., which is a glycidyl ester of a C12-14 aliphatic monocarboxylic acid and has an epoxy equivalent of 240 to 250), pigments and fillers.

The epoxy resin into which the hardening agent of the present invention is incorporated can be hardened even at temperatures as low as 0 to 5°C or on wet surfaces. The hardened product has satisfactory surface gloss and smoothness, and is excellent in other properties such as resistance to chemicals, moisture and corrosion, and has very strong bonding properties. For these reasons, the hardening agent produced by the process of the present invention can be used for a wide variety of uses.

The present invention is described hereinafter in greater detail by reference to the following examples and comparative examples, wherein percentages are by weight.

Example 1

A mixture of 94 g (1 mole) of phenol and 340 g (2.5 moles) of meta-xylylenediamine was charged in a reaction vessel equipped with a stirrer and a thermometer, and the temperature of the mixture was elevated to 90°C under a nitrogen gas stream. Thereafter, 146 g (1.8 moles) of 37% formalin was added to the mixture over a period of 2 hours. The reaction mixture was allowed to react while being kept at a temperature between 90° and 95°C for 2 hours, and then the temperature was elevated gradually to 180°C to distil off the water formed during the reaction to obtain a transparent pale yellow product (Hardening Agent A). The properties of the resulting hardening agent are shown in Table 1 below.

Example 2

A mixture of 108 g (1 mole) of phenol and 284 g (2 moles) of 1,3-bis(aminomethyl)cyclohexane was charged in the reaction vessel used in Example 1 and the temperature of the mixture was elevated to 90°C under a nitrogen gas stream. Thereafter, 122 g (1.5 moles) of 37% formalin was added to the mixture over a period of 1.5 hours. The resulting mixture was then allowed to react for 2 hours in the same manner as described in Example 1, and the temperature was then elevated to 180°C to distil off the water formed during the reaction to obtain a product (Hardening Agent B). The properties of the resulting hardening agent are also shown in Table 1.

Example 3

A mixture of 94 g (1 mole) of phenol and 272 g (2 moles) of meta-xylylenediamine was charged in the reaction vessel used in Example 1 and the temperature of the mixture was elevated to 90°C under a nitrogen gas stream. Thereafter, 97 g (1.2 moles) of 37% formalin was added to the mixture over a period of 1 hour. The resulting mixture was subsequently treated as described in Example 2 to obtain a product (Hardening Agent C). The properties of the resulting hardening agent are also shown in Table 1.

Example 4

A mixture of 108 g (1 mole) of ortho-cresol and 299 g (2.2 moles) of meta-xylylenediamine was charged in the reaction vessel used in Example 1 and the temperature of the mixture was elevated to 90°C under a nitrogen gas stream. Thereafter, 105 g (1.3 moles) of 37% formalin was added to the mixture over a period of 1 hour. The resulting mixture was subsequently treated as described in Example 3 to obtain a reaction product (Hardening Agent D). The properties of the resulting hardening agent are shown in Table 1.

Comparative Example 1

A mixture of 94 g (1 mole) of phenol and 272 g (2 moles) of meta-xylylenediamine was charged in the reaction vessel as used in Example 1, and 122 g (1.5 moles) of 37% formalin was added to the mixture over a period of 1.5 hours while maintaining the temperature of the mixture below 40°C. A white substance was produced in such a large amount that further stirring of the reaction mixture was impossible and the reaction was discontinued at this point of time.

Comparative Example 2

272 g (2 moles) of meta-xylylenediamine was charged in the reaction vessel used in Example 1, and 94 g (1 mole) of phenol and 122 g (1.5 moles) of 37% formalin were added over a period of 1.5 hours while maintaining the temperature of the mixture below 40°C. A white bulky substance was produced in such a large amount that further stirring of the reaction mixture was impossible.

Comparative Example 3

122 g (1.5 moles) of 37% formalin was added to 94 g (1 mole) of phenol over a period of 30 minutes, while maintaining the temperature of the mixture below 40°C. The temperature of the mixture was elevated to 90 to 95°C under a nitrogen gas stream and the mixture was allowed to react at that temperature for one hour. To the resulting reaction product, 272 g (2 moles) of meta-xylylenediamine was added over a period of 15 minutes, and the mixture was further allowed to react at a temperature between 90 and 95°C for 2 hours. The reaction product was heated gradually to 180°C to distil off the water produced during the reaction to obtain a reaction product (Hardening Agent E). The properties of the resulting mixture are also shown in Table 1.

Comparative Example 4

272 g (2 moles) of meta-xylylenediamine was added to a mixture of 94 g (1 mole) of phenol and 122 g (1.5 moles) of 37% formalin over a period of 1.5 hours while maintaining the temperature of the mixture at 80°C. The reaction mixture became too glutinous to be stirred effectively, and the reaction was discontinued at this point of time.

Comparative Example 5

A mixture of 94 g (1 mole) of phenol and 54 g (0.67 mole) of 37% formalin was heated at a temperature between 90 and 95°C for one hour under a nitrogen gas stream. To the reaction mixture, 136 g (1 mole) of meta-xylylenediamine was added over 15 minutes, and the mixture was allowed to react at a temperature between 90 and 95°C for 2 hours. Thereafter, the mixture was heated gradually to 180°C to distil off the water produced during the reaction to obtain a reaction product (Hardening Agent F). The properties of the resulting

- 11 -

product are also shown in Table 1.

## Comparative Example 6

The procedure of Comparative Example 5 was repeated except that phenol, 37% formalin and meta-xylylenediamine were used in amounts of 94 g (1 mole), 81 g (1 mole) and 136 g (1 mole), respectively, to obtain a reaction mixture (Hardening Agent G). The properties of the resulting product are also shown in Table 1.

## Comparative Example 7

A mixture of 94 g (1 mole) of phenol and 136 g (1 mole) of meta-xylylenediamine was heated at a temperature between 50 and 60°C under a nitrogen gas stream and 81 g (1 mole) of 37% formalin was added to the mixture over one hour. Thereafter, the temperature of the mixture was elevated to 90 to 95°C and the mixture was allowed to react at that temperature for 2 hours. The temperature of the reaction mixture was elevated gradually to 180°C to distil off the water produced during the reaction to obtain a reaction product (Hardening Agent H). The properties of the resulting product are also shown in Table 1.

Table 1

|  |  | Hardening Agent | Properties | | |
|---|---|---|---|---|---|
|  |  |  | Amine Value (mg KOH/g) | Free Amine Content (%) | Viscosity (cps., 25°C) |
| Ex. | 1 | A | 580 | 0.8 | 3,500 |
| " | 2 | B | 540 | 2.5 | 4,000 |
| " | 3 | C | 500 | 3.1 | 2,400 |
| " | 4 | D | 560 | 2.0 | 2,500 |
| Comp. |  |  |  |  |  |
| Ex. | 3 | E | 565 | 2.0 | 10,200 |
| " | 5 | F | 455 | 15.0 | 5,300 |
| " | 6 | G | 450 | 10.0 | 105,000 |
| " | 7 | H | 453 | 9.7 | 66,000 |

## Example 5

Each of 48 parts by weight of Hardening Agent A (Example 1) and 42 parts by weight of Hardening Agent E (Comparative Example 3) was blended with 100 parts by weight of a bisphenol type epoxy resin having an epoxy equivalent of 190, and the mixture was hardened at a temperature of 20°C over a period of 7 days to form a cast sheet having a thickness of 3 mm. The properties of the two resin sheets are shown in Table 2. The resin hardened with Hardening Agent A of the present invention showed better properties than the resin hardened with conventional Hardening Agent E in all respects. Therefore, the hardening agent produced by the process of the present invention can be said to be more practical in view of its small content of residual unreacted phenols and extremely low viscosity.

### Table 2

| Properties | Unit | Hardening Agent A | Hardening Agent E |
|---|---|---|---|
| Flexural Strength | $kg/cm^2$ | 840 | 800 |
| Tensile Strength | $kg/cm^2$ | 340 | 360 |
| Elongation | % | 0.7 | 0.5 |
| Izod Impact Strength (without notch) | $kg \cdot cm/cm$ | 7.6 | 6.5 |
| Heat Distortion Temperature | °C | 52 | 53 |

## Example 6

A mixture of 108 g (1 mole) of ortho-cresol and 204 g (1.5 moles) meta-xylylenediamine was charged in a reaction vessel equipped with a stirrer, and the temperature of the mixture was elevated to 90°C under a nitrogen gas stream. Thereafter, 97 g (1.2 moles) of 37% formalin was added to the mixture over a period of one hour. The reaction mixture was allowed to react at a temperature between 90 and 95°C for 2 hours and, thereafter, the temperature was elevated gradually to 180°C to distil off the water produced during the reaction. To the reaction product, 27 g (0.5 mole) of acrylonitrile was added and the mixture was stirred for one hour. Upon addition of 35 g of benzyl alcohol a transparent pale yellow product was formed (Hardening Agent I). The properties of the resulting product are shown in Table 3 below.

Example 7

A mixture of 108 g (1 mole) of ortho-cresol and 241 g (1.7 moles) of 1,3-bis(aminomethyl)cyclohexane was charged in the reaction vessel used in Example 6, and the temperature of the mixture was elevated to 90°C under a nitrogen gas stream. Thereafter, 105 g (1.3 moles) of 37% formalin was added to the mixture over a period of one hour. The resulting mixture was allowed to react as described in Example 6 and the temperature was then increased up to 180°C to distil off the water produced during the reaction. To the residue, 32 g (0.6 mole) of acrylonitrile was added and the mixture was stirred for one hour to obtain a reaction product (Hardening Agent J). The properties of the resulting product are also shown in Table 3.

Example 8

The procedure of Example 6 was repeated except that ortho-cresol, meta-xylylenediamine, 37% formalin and acrylonitrile were used in amounts of 108 g (1 mole), 272 g (2 moles), 122 g (1.5 moles) and 37 g (0.7 mole), respectively, with the formalin addition period being 1.5 hours to obtain a reaction product (Hardening Agent K). The properties of the resulting product are also shown in Table 3.

Example 9

The procedure of Example 6 was repeated except that ortho-cresol, meta-xylylenediamine, 37% formalin and acrylonitrile were used in amounts of 108 g (1 mole), 340 g (2.5 moles), 146 g (1.8 moles) and 53 g (1 mole), respectively, with the formalin addition period being 2 hours to obtain a reaction product (Hardening Agent L). The properties of the resulting product are also shown in Table 3.

Comparative Example 8

A mixture of 94 g (1 mole) of phenol and 54 g (0.67 mole) of 37% formalin was charged in the reaction vessel used in Example 6 together with 2.5 g of meta-xylylenediamine as a catalyst, and the reaction mixture was heated at a temperatu between 90 and 95°C for one hour under a nitrogen gas strear Thereafter, 133.5 g (1 mole in combination with other catal; components) of meta-xylylenediamine was added over a period of 15 minutes, and the mixture was maintained at a temperatu between 90 and 95°C for 2 hours. The reaction mixture was heated gradually to 180°C to distil off the water produced during the reaction to obtain a reaction product (Hardening Agent M). The properties of the resulting product are also shown in Table 3.

Comparative Example 9

A mixture of 94 g (1 mole) of phenol and 272 g (2 moles) of meta-xylylenediamine was charged in the reaction vessel used in Example 6, and 97 g (1.2 moles) of 37% formalin was added over a period of one hour while maintaining the mixture at 90°C under a nitrogen gas stream. Then, the reaction mixture was allowed to react at a temperature between 90 and 95°C for 2 hours. The mixture was heated gradually to 180°C to distil off the water produced during the reaction to obtain a reaction product (Hardening Agent The properties of the resulting product are also shown in

Table 3.

Table 3

| | Hardening Agent | Amine Value (mg KOH/g) | Viscosity (cps.25°C) | Properties Unreacted Phenol Content(%) | Unreacted Amine Content(%) | t (min)* |
|---|---|---|---|---|---|---|
| Ex. 6 | I | 395 | 2,500 | 2.5 | 21 | 23 |
| " 7 | J | 430 | 4,300 | 1.8 | 27.1 | 23 |
| " 8 | K | 464 | 4,900 | 2.3 | 26.4 | 25 |
| " 9 | L | 483 | 5,300 | 0.7 | 30 | 30 |
| Comp. Ex. 8 | M | 469 | 5,300 | 15 | 50 | 15 |
| " 9 | N | 520 | 2,400 | 3.1 | 55 | 18 |

*t: The time required for reaching the maximum temperature of a mixture of Epikote 828 (an epoxy resin manufactured by Yuka Shell Epoxy Co., Ltd.) and a hardening agent having a total weight of 50 g (the epoxy resin and the hardening agent being mixed in a proportion of active hydrogen equivalent with respect to epoxy equivalent), as determined by hardening the mixture in a 100 ml capacity polypropylene cup while maintaining a constant temperature of 20°C in a thermostatic chamber. The value indicates the hardening property. Epikote 828 is a digylcidyl ether type of epoxy resin made from bisphenol A, having an epoxy equivalent of 190.

As shown in Table 3, the hardening agent prepared by the process of this invention has low contents of unreacted phenols and amines. In addition, it has good hardening properties and can be handled very easily, which is markedly advantageous in industrial application.

Claims:

1.     Process of preparing an agent for the hardening of an epoxy resin which comprises mixing a phenol and a polyamine, subsequently adding formaldehyde, and allowing reaction of the three reactants, characterised in that (i) the phenol and amine are heated at a temperature of $70^{\circ}$ to $100^{\circ}$C to react together before addition of formaldehyde, (ii) the mixture of the three reactants is allowed to react at $70^{\circ}$C to $100^{\circ}$C with stirring, (iii) the reaction mixture is then heated to $100^{\circ}$ to $180^{\circ}$C to substantially remove the water formed in the reaction, and optionally (iv) there is added 0.1 to 1.5 mole acrylonitrile per mole of the phenol to the dehydrated reaction mixture, in which case in step (i) the proportion of amine can be 1.0 to 2.5 moles per mole of phenol whilst if step (iv) is not carried out said proportion in step (i) must be 2 to 2.5 moles.

2.     A process according to Claim 1, wherein said phenol is one or more of phenol, cresol, alkylphenol, arylphenol, aralkylphenol or polyfunctional phenolic compound.

3.     A process according to Claim 1 or 2, wherein said formaldehyde is formaldehyde, para-formaldehyde or trioxane.

4.     A process according to Claim 1, 2 or 3, wherein said amine is a linear aliphatic polyamine, aromatic ring-containing aliphatic polyamine, alicyclic polyamine or a mixture thereof.

5.     A hardening agent produced by a process according to any preceding claim, containing not more than 5 % by weight of unreacted phenol and not more than 35 % by weight of unreacted amine and having a viscosity at $25^{\circ}$C of not more than 8000 centipoises.

6.     An epoxy resin which has been hardened by the use of a hardening agent as claimed in Claim 5.

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-1 954 919   (SCHERING AG)<br>* Claims; examples *<br><br>--- | 1 | C 08 G   14/06<br>C 08 G   14/12<br>C 08 L   63/00<br>C 08 G   59/62 |
| A | FR-A-1 568 011   (RUTGERSWERKE)<br>* Abstract; examples *<br><br>--- | 1 | |
| A | GB-A-  868 892   (BAKELITE LTD.)<br>* Claims; examples *<br><br>--- | 1 | |
| A | FR-A-2 304 598   (MINNESOTA MINING AND MANUFACTURING COMPANY)<br>* Example 1 *<br><br>----- | 1 | |

| TECHNICAL FIELDS SEARCHED (Int. Cl. ³) |
|---|
| C 08 G<br>C 08 L |

The present search report has been drawn up for all claims

| Place of search | Date of completion of the search | Examiner |
|---|---|---|
| THE HAGUE | 31-08-1982 | MALHERBE Y.J.M. |